# EUROPÄISCHE PATENTANMELDUNG

(11) **EP 2 472 134 A2**
(43) Veröffentlichungstag der Anmeldung: **04.07.2012**
(21) Anmeldenummer: 11191703.5
(22) Anmeldetag: 02.12.2011
(51) Int. Cl.: F16D 23/04

(54) **Schaltgetriebe mit mehrteiligem Servosynchronisationsdruckstück und dazugehöriges Synchronisationsverfahren**

(30) Priorität: 02.12.2010 DE 102010060967
(71) Anmelder: hofer forschungs- und entwicklungs GmbH, 4451 Garsten (AT)
(72) Erfinder: Hackl, Thomas, 4642 Sattledt (AT); Himmelbauer, Thomas, 4432 Ernsthofen (AT)
(74) Vertreter: Cremer, Christian

(57) **Zusammenfassung**

Es besteht ein weithin verbreiterter Wunsch im Automobilbau, die bekannten Vorteile von Servosynchronisationsdruckstücken in solchen Getriebesynchronisationen umsetzen zu können, die als ausreichend langlebig bisher ein positives Renommee erworben haben. Hierbei sollten möglichst wenige Änderungen an der Getriebesynchronisation erforderlich sein.

Solche Synchronisationsdruckstücke helfen bei der Synchronisation von Zahnradwechselgetrieben, d. h., sie sind schwerpunktmäßig dafür ausgelegt, das Einspuren der Schiebemuffe zu verhindern bzw. zu erleichtern. Das Synchronisationsdruckstück lässt sich mehrteilig aufbauen. Bei mehrteiligen Synchronisationsdruckstücken besteht das Druckstück aus mehreren Elementen, wenigstens aus einem ersten und einem zweiten Gefügeelement. Die Gefügeelemente werden zu einem Synchronisationsdruckstück zusammengefügt. Aufgrund einer Krafteinwirkung auf das Synchronisationsdruckstück legt dieses während der Synchronisationsphase mehrere Bewegungen zurück. Es findet eine Parallelverschiebung statt, die u. a. durch die Mehrteiligkeit ermöglicht wird.

## Beschreibung

Die vorliegende Erfindung bezieht sich auf ein Druckstück, das als Teil einer Synchronisation von zwei Zahnrädern eines Zahnradwechselgetriebes verbaut werden kann. Die vorliegende Erfindung bezieht sich weiterhin auf ein Getriebe mit entsprechenden Druckstücken.

Hierbei werden vorrangig Schaltgetriebe betrachtet, die mit Druckstücken ausgestattet, ein synchronisiertes Einlegen eines Ganges erlauben. Die Druckstücke unterstützen den Synchronisationsvorgang zwischen einem Antriebszahnrad und einem als Abtriebszahnrad genutzten zweiten Zahnrad, insbesondere einem Losrad.

### Stand der Technik

Grundzüge zum Aufbau eines Schaltgetriebes und zu Komponenten für die Synchronisation beim Gangwechsel sowie zum Ablauf einer Schaltsynchronisation sind dem Buch G. Lechener, H. Naunheimer, "Fahrzeuggetriebe: Grundlagen, Auswahl, Auslegung und Konstruktion", Berlin: Springer 1994, ISBN 3-540-57423-9 zu entnehmen. Insbesondere gehen hieraus Synchronisationseinrichtungen mit einer Sperrverzahnung am Synchronring hervor.

In den Anmeldeschriften WO 2006/128627 A1 (Anmelderin: DaimlerChrysler AG; Prioritätstag: 03.06.2005) und DE 10 2007 040 438 A1 (Anmelderin: Daimler AG; Anmeldetag: 28.08. 2007) sind Synchronisationseinrichtungen beschrieben, die ohne Sperrverzahnung auskommen. Die Sperrwirkung auf eine Schiebemuffe bis zum Eintreten eines Gleichlaufs wird über ein Druckstück, welches zweigeteilt ist, realisiert. Diese Art der Synchronisierung verspricht keine Verbesserung der Synchronisationsfunktion an und für sich, vereinfacht aber die Bauteile, vor allem den Synchronring.

Eine ähnliche Ausführung einer Synchronisation mit Sperreinrichtung ist in der Gebrauchsmusterschrift DE 20 2009 010 459 U1 (Inhaberin: Hoerbiger Antriebstechnik GmbH; Anmeldetag: 23.07.2009) beschrieben. Die Sperrfunktion wird ohne eine Sperrverzahnung des Synchronrings über ein zweiteiliges Druckstück realisiert. Das zweiteilige Druckstück hat die Gestalt eines Sperrsteins, der in einem Synchronstein auf konusartigen Kontaktflächen angeordnet ist, mit einer zwischen den Steinen eingefügten Federanordnung. Der Synchronstein ist für einen Eingriff in eine Ausnehmung eines Synchronrings vorgesehen. Die Feder stützt sich am Synchronring ab. Synchronstein und Sperrstein sind mit rechteckartigen Außenformen gestaltet. Vorteile liegen vor allem in einer kostengünstigen Herstellbarkeit dieser Synchronisierung. Weitere vergleichbare Varianten sind in der Patentschrift DE 10 2007 010 307 B3 erörtert, die sich insbesondere hinsichtlich der Führung der Feder und der Anfügung der Schiebemuffe an das Sperrglied entsprechend dem Sperrstein und deren Anordnung zu einem Synchronglied entsprechende dem Synchronstein unterscheiden.

Je nachdem, ob nur ein Teil des Drehmomentflusses oder der gesamte Drehmomentfluss zur Unterstützung der Synchronisation eingesetzt wird, lassen sich Semi-Servo-Synchronisierungen von Voll-Servo-Synchronisierungen unterscheiden.

Servosynchronsationsdruckstücke sind solche Druckstücke, die das Drehmoment in Naben auf Getriebewellen in verstärkender Weise bei der Synchronisation zweier Zahnräder vermitteln. Die Servosynchronisationsdruckstücke verstärken die Synchronisationskraft aus dem Drehmoment.

Grundlegende Entwürfe für eine selbstverstärkende Getriebesynchronisationen sind z. B. in der Offenlegungsschrift DE 32 08 945 A1 (Anmelderin: Zahnradfabrik Friedrichshafen AG; Anmeldetag: 12.03.1982) beschrieben. Hierbei handelt es sich um eine Hebelsynchronisierung, die einerseits aufgrund der unterschiedlichen Angriffspunkte der sich radial erstreckenden Druckstücke während der Synchronphase die "Vorsynchronkraft" verstärkt. Andererseits ist auch eine über Kugelrampen realisierte Selbstverstärkung vorgesehen. Die Synchronisierung ist wahrscheinlich aufgrund der hohen Belastungen als Lamellensynchronisierung realisiert.

In US 2010/012 453 A1 (Anmelder: Kazuyoshi Hiraiwa; Anmeldetag: 25.09.2009) wird eine Synchronisierung nach Art einer Voll-Servo-Synchronisierung offengelegt, die weitgehend einer Eaton low force Synchronisierung entspricht. Die Sperrwirkung ist in das Verstärkungselement integriert. Eine Anwendung im Rückwärtsgang ist vorgesehen, Die Verstärkung ist nur von einer Seite möglich. Eine Sperrfunktion erfolgt möglicherweise über verschleißanfällige Flächen und bei schnellen Schaltungen könnte eine Anfälligkeit für Sperrversagen vorliegen. Eine Weiterentwicklung ist in EP 1 750 025 A2 (Anmelderin: Kyowa Metal Works Co., Ltd.; Prioritätstag 05.08.2005) beschrieben. Sie ist eine klassische Semi-Servo-Synchronisierung mit noch vorhandener Sperrverzahnung. Für Synchronisierungen, die nur eine leichte Verbesserung der Schaltkraft benötigen ist sie gut anwendbar Die Form des Druckstücks ist einem H sehr ähnlich. Die vier aktiven Servoschrägen liegen während der Synchronphase parallel zur Sperrverzahnung an, d.h. dass nur ein Teil des Momentflusses genutzt wird. Bei niedrigerer Sperrsicherheit der Sperrverzahnung nimmt die Wirkung stark ab. Die Verstärkung ist daher sehr stark vom Reibwert abhängig. Es kann zu starken Streuungen in der Leistungsfähigkeit kommen. Ein weiteres Merkmal, welches zu berücksichtigen ist, ist eine relativ hohe Entsperrkraft im Vergleich zur Synchronkraft. Dies ist vor allem bei Getrieben mit hohem Schleppmoment von Nachteil. Hinsichtlich Integration und Gesamtschaltkomfort, sind die Anforderungen etwas geringer als bei einer Voll-Servo-Synchronisierung, weil die Synchronkraft nicht im selben Maße sinkt.

In US 3 548 983 A(Inhaberin: Missan Motor Company, Ltd.; Prioritätstag: 15.5.1968) wird eine selbstverstärkende Synchronisierung nach Art einer Voll-Servo-Synchronisierung in verschiedenen Ausführungsformen beschrieben. Eine Weiterentwicklung in EP 1 517 064 A2 (Anmelderin: Nissan Motor Company, Ltd.; Prioritätstage: 19.09.2003, 30.04.2004) nutzt zur Selbstverstärkung im ersten Ansatz eine direkte tangentiale Verspannung zwischen Synchronring und Synchronnabe, dargestellt durch eine Servo-Schräge. Dies ist dahingehend problematisch, weil auch Schleppmomente verstärkt werden und es zu einem relativ selbständigen Ansynchronisieren kommen kann.

Weitere Ausführungen von verstärkenden Synchronisierungen, wobei ein Teil der Rotationsenergie zur Unterstützung der Synchronsiation eingesetzt wird, sind bspw. der Patentanmeldung WO 1997 049 934 A1 (Anmelderin: AB Volvo; Prioritätstag: 24.06.1996) oder dem Patent EP 144 962 B1 (Inhaberin: Toyota Jidosha Kabushiki Kaisha; Prioritätstage: 05.12.1983, 02.11.1984) zu entnehmen.

Eine Synchronisierung nach DE 44 44 380 A1 (Anmelderin: ZF Friedrichshafen AG; Anmeldetag: 14.12.1994) weist ein sechsseitiges Servo-Element auf, das zwischen Servoschrägen in der Synchronnabe und dem Synchronring tangential eingespannt ist. Diesen Lösungen entsprechend ausgeführte Prototypen ließen den Durchgang durch die Mittelstellung der Schiebe- bzw. Schaltmuffe aufgrund von Geräuschbildung und ggf. sogar Hakeln als unvorteilhaft realisiert erscheinen.

Durch eine robuste und einfache Bauart zeichnet sich eine Synchronisierung nach WO 2009 076 691 A2 (Anmelderin: MIBA Sinter Austria GmbH; Prioritätstag: 18.12.2007) aus. Eine derartige Synchronisierung für zwei gegenüberliegende Gänge besteht aus den gleichen Teilen wie eine Standard-Doppelkonussynchronisierung mit dem Unterschied, dass für jede Seite je drei Druckstücke, gleichzeitig als Verstärkungselemente, Verwendung finden. Eine Lasche des Innenrings des Doppelkonuspakets greift in die Verstärkungselemente ein. Dadurch werden diese in Umfangsrichtung mitgenommen und übertragen einen Teil des Moments. Dieses Moment wird an einer Servoschräge in der Synchronnabe abgestützt. Weil das Moment für Hoch- und Rückschaltungen in verschiedene Richtungen wirkt, befinden sich auf beiden Seiten des Verstärkungselements Servoschrägen, die auch mit einem unterschiedlichen Winkel gestaltet werden können. Über die Servoschrägen wird das Moment an den Verstärkungselementen in eine axiale Kraft umgewandelt, die proportional zum Synchronmoment den Anpressdruck am Synchronring verstärkt. Diese Funktionsweise ist völlig entkoppelt von der herkömmlichen Sperrwirkung, die über die Sperrzähne des Außensynchronrings und die Schiebemuffe gewährleistet ist. Obwohl nur ein Teil des Moments für die Verstärkung genutzt wird, ist diese Synchronisierung trotzdem im vollen Kraftfluss und genauso leistungsfähig wie eine Voll-Servo-Synchronisierung. Allerdings kann diese Synchronisierung nicht für Einfachkonussysnchonisierungen verwendet werden, weil dabei die Mitnahme der Verstärkungselemente nicht darzustellen ist. Ausführungen im PKW-Bereich, insbesondere für Doppelkupplungsgetriebe, sind angedacht.

Die Patentschrift DE 10 2006 044 352 B3 (Inhaberin: Hofer-pdc GmbH; Anmeldetag: 18.09.2006) beschreibt eine Semi-Servo-Synchronisierung, die als zentrales Element ein I-förmiges Druckstück beinhaltet. Parallel zum Sperrmoment von Sperrzähnen am Synchronring überträgt dieses Druckstück, auch als Servoelement zu bezeichnen, einen Teil des Synchronmoments anstelle nur eine tangentiale Abstützung an dem Synchronring zu suchen, wenn es sich um eine Standardsynchronisierung handeln würde. Dieses Restmoment wird über Servoschrägen am Druckstück und an der Synchronnabe in eine zusätzliche, verstärkende Kraft am Synchronring umgewandelt. Weiterhin wird in dem Patent eine Ausführung gezeigt, welche die Funktionalität einer Voll-Servo-Synchronisierung mit einer dreidimensionalen Sperrwirkung und Entsperrbewegung vereinigt. Dadurch entsteht eine vereinfachte Geometrie. Der Synchronring kann sperrzähnefrei gestaltet werden. Es können mehrere Druckstücke, wie z. B. drei Druckstücke, eingesetzt werden, die als Verstärkungselemente verwendet sind und im vollen Momentfluss stehen. Neben der eigentlichen Funktion der Rastierung werden in dieser kompakten Bauweise auch die Funktionen des Sperrens und die Funktion des Verstärkens durch die entlang des Nabenumfangs angeordneten drei Druckstücke übernommen. Allerdings ist bei Gestaltungen mit hohen Flächenpressungen eine aufwendige Oberflächenhärtung immer noch durchzuführen.

### Technische Schwierigkeiten

Aufgrund der auf sie einwirkenden Belastungen werden die als grundsätzlich interessant anzusehenden Servosynchronsationsdruckstücke im Allgemeinen sehr zögerlich in Getriebesynchronisationen verbaut, obwohl sie entweder den Fahrkomfort steigern oder die notwendige Kraft beim Schaltvorgang reduzieren könnten.

### Aufgabenstellung

Es besteht ein weithin verbreiterter Wunsch im Automobilbau, die bekannten Vorteile von Servosynchronisationsdruckstücken in solchen Getriebesynchronisationen umsetzen zu können, die als ausreichend langlebig bisher ein positives Renommee erworben haben. Hierbei sollten möglichst wenige Änderungen an der Getriebesynchronisation erforderlich sein.

### Erfindungsbeschreibung

Die erfindungsgemäße Aufgabe wird durch ein Synchronisationsdruckstück nach Anspruch 1 gelöst. Ein vorteilhaftes Schaltgetriebe wird in Anspruch 14 beschrieben. Wie eine Synchronisation bzw. ein Verfahren zur Synchronisation zu verbessern ist, lässt sich Anspruch 15 entnehmen. Vorteilhafte Weiterbildungen sind den abhängigen Ansprüchen zu entnehmen.

Synchronisationsdruckstücke helfen bei der Synchronisation von Zahnradwechselgetrieben, d. h., sie sind schwerpunktmäßig dafür ausgelegt, das Einspuren der Schiebemuffe bzw. der Schaltmuffe zu verhindern bzw. zu erleichtern. Das Synchronisationsdruckstück lässt sich einteilig oder mehrteilig aufbauen. Bei mehrteiligen Synchronisationsdruckstücken besteht das Druckstück aus mehreren Elementen, wenigstens aus einem ersten und einem zweiten Gefügeelement. Die Gefügeelemente werden zu einem Synchronisationsdruckstück zusammengefügt. Wie zuvor diskutiert, hilft das Synchronisationsdruckstück bei der Drehzahlsynchronisation von Getriebegangelementen, wie z. B. bei der Drehzahlangleichung eines Synchronkörpers und eines Losrades, die auf der gleichen Welle angesiedelt sind. Das Synchronisationsdruckstück ist dafür bestimmt, in Ausnehmungen einer Nabe eines Synchronkörpers, insbesondere mehrfach verteilt über den Umfang, angeordnet zu werden. So können z. B. drei, vier, fünf oder sechs Synchronisationsdruckstücke in eignen Plätzen des Synchronkörpers angesiedelt werden. Das Synchronisationsdruckstück greift mit einem Ende in eine Schiebemuffe ein. Das Synchronisationsdruckstück wird häufig durch eine Feder in seiner von einer Mittelachse der Welle entfernten Position gehalten. Hierbei ist es vorteilhaft, wenn das Synchronisationsdruckstück zumindest zweigeteilt ist. In einem solchen Fall lässt sich das Synchronisationsdruckstück mit seinen Einzelteilen individueller gestalten.

Das Synchronisationsdruckstück ist ein räumlich verteilter Gegenstand, der somit einen Schwerpunkt aufweisen kann. Der Schwerpunkt kann ein geometrischer oder auch ein Masseschwerpunkt sein. Durch diesen Schwerpunkt lässt sich eine Gerade bzw. eine Achse ziehen. Die Achse geht durch den Schwerpunkt des Synchronisationsdruckstücks hindurch. Die Achse geht durch das Druckstück hindurch. Die Achse schneidet diesen Punkt in dem Druckstück. Quer zu dieser Achse, also querverlaufend zur Synchronisationsschwerpunktsachse, ist mindestens eine Fläche vorhanden, die als Drucklager dienen kann. Das Drucklager ist zur Aufnahme einer Kraft bzw. eines Drehmoments bestimmt. Ein solches Drucklager sollte an einer äußeren Fläche einer der beiden Gefügeteile vorhanden sein, sodass ein leichter Zugang zu dem Drucklager möglich ist. Ein ineinander eingreifendes Zusammenwirken wird damit vermieden. Das Drucklager befindet sich somit an einer äußeren Oberfläche. Eine Kraft kann auf das Drucklager ausgeübt werden. Eine laterale Krafteinwirkung ist auf das Drucklager möglich. An wenigstens einem der beiden vorhandenen Gefügeelementen ist ein von außen leicht zugängliches Drucklager, über das eine laterale Krafteinwirkung möglich ist. Findet die laterale Krafteinwirkung statt, werden die Gefügeelemente zueinander in ihren Relativlagen verändert. Für das Beschreiben bzw. das Kennzeichnen des Wandern bzw. des Kippen des einen Gefügeelements gegenüber dem anderen Gefügeelement lässt sich eine Orthogonale auf eine Fläche des Drucklagers fällen. Die Verschiebung erfolgt in einer Parallelverschiebung. Ohne äußere Krafteinwirkung kann die reguläre Position zwischen den beiden Gefügeelementen als planparallel bezeichnet werden. Oberflächen der Gefügeelemente liegen übereinander. Findet eine laterale Krafteinwirkung statt, so verändert sich die Position des einen Gefügeelements gegenüber dem anderen Gefügeelement. Die planparallele Anordnung wird verlassen. Hierbei können Schiebeflächen an den beiden Gefügeelementen helfen, die eine weitergehende Berührung erlauben, jedoch eine relative Lageänderung der Gefügeelemente zueinander erlauben.

Aufgrund einer Krafteinwirkung auf das Synchronisationsdruckstück legt dieses während der Synchronisationsphase mehrere Bewegungen zurück. Es findet eine Parallelverschiebung statt. Das Druckstück kann an seiner Servoschräge entlang wandern. Darüber hinaus findet eine Auswinkelung zwischen den einzelnen Teilen des Synchronisationsdruckstücks statt. In einer kraftlosen Position oder in einer Ruhelage liegen die beiden Gefügeelemente in einer planparallelen Lage, die auch als Ausgangslage bezeichnet werden kann. Das eine Gefügeelement ruht auf dem anderen Gefügeelement. Entlang der Linienberührung zwischen den Gefügeelementen ist eine plane Ausrichtung der Gefügeelemente gegeben. Eines der Gefügeelemente ist so gestaltet, dass es in den Synchronring eingreifen kann. Es ist ein Ziel der Synchronisation, in den Synchronring eingreifend in eine solche Position parallelverschoben zu gelangen. Zudem kann das eine Gefügeelement zu dem anderen Gefügeelement eine ausgewinkelte Lage einnehmen. Die Gefügeelemente werden verschoben. Weiterhin werden die Gefügeelemente in ihrer Relativlage verändert. Zusätzlich drückt die Feder die Gefügeelemente auseinander. Die Feder verläuft durch das eine Gefügeelement und lagert an dem anderen Gefügeelement.

Ein solches, aus mehreren Teilen bestehendes Synchronisationsdruckstück lässt sich in einem Schaltgetriebe, vorzugsweise in den Synchronisierungen des Schaltgetriebes verbauen.

Ein Schaltgetriebe lässt sich besonders kompakt gestalten, wenn zu einem Synchronkörper zwei unterschiedliche Gänge zugeordnet werden. Einem Synchronkörper werden in einem solchen Fall zwei Zahnräder für zwei unterschiedliche Gänge nebengereiht. Den ruckfreien Gangwechsel fördert eine Synchronisation. Als Teil der Synchronisation hat das Schaltgetriebe wenigstens einen Synchronring, in der Regel jeweils wenigstens einen Synchronring pro vorhandenem Gang. An dem Synchronkörper gibt es eine Nabe. Die Gangwechsel, also das Ein- und Auslegen der Gänge, wird durch Schiebemuffen bewerkstelligt. Für das Einlegen eines Ganges wird eine Schiebemuffe in eine Kraftübertragungsposition gebracht, z. B. durch Schieben. Alle zuvor angesprochenen Bauteile sind entlang einer gemeinsamen Achse aufgefädelt.

Das Synchronisationsdruckstück ist ein wenigstens in zwei Teilen zerlegbares Druckstück. In der Regel wird das Synchronisationsdruckstück aus mehr als zwei Teilen zusammengesetzt, z. B. aus einer Feder, aus einem Federwiderlager, einer Synchronbrücke und einem Verstärkungselement. Die beiden von außen deutlich zu sehenden Teile sind in einem solchen Fall die Synchronbrücke und das Verstärkungselement. Die beiden Teile können als erstes und als zweites Gefügeelement bezeichnet werden. Eines der Gefügeelemente hat eine Synchronschräge. Die Synchronschräge dient als Servoschräge. Über die Servoschräge kann ein Drehmoment eingebracht werden. Das über seine Kraft eingeleitete Drehmoment wird in eine Schiebekraft beim Einspuren der Schiebemuffe umgelenkt. Hierzu wird die Richtung der Kraft verändert. Das Synchronisationsdruckstück ist in seinen Abmessungen auf Freiräume, so genannten Ausnehmungen, abgestimmt. Ein Kippraum ist zumindest in einem Bauteil vorhanden. Hierfür wird entweder in der Schiebemuffe oder in der Nabe des Synchronkörpers eine Servoausnehmung, besonders beliebt werden mehrere Servoausnehmungen, vorgehalten. Die Servoausnehmung schafft Platz, damit das Synchronisationsdruckstück über seine Servoschräge eine Anlagerung suchen kann. Das über die Servoschräge übertragene Drehmoment bzw. die Kraft aus dem Drehmoment wird in Richtung auf das neben dem Synchronkörper angeordnete Losrad ausgeleitet. Das Drehmoment wird in verstärkender Weise als Anpresskraft genutzt.

Schwerpunkte des Ablaufs während der Synchronisation lassen sich in verschiedenen Hinsichten unterstreichen.

Das Servosynchronisationsdruckstück realisiert die Servosynchronisation u. a. dadurch, dass zwei Druckgefügeelemente zusammengesetzt das Synchronisationsdruckstück ergeben. Zusätzlich kann eine Feder an dem oberen, zu der Schiebemuffe näher angeordneten Druckstückteil angreifen, insbesondere auf der der Schiebemuffe abgewandten Seite. Besonders vorteilhaft ist es, wenn die Servosynchronisation mit den folgenden Teilen aufgebaut ist: mit einer Mehrzahl von Getriebegangelementen, wie z. B. mindestens mit einer Nabe und mit mindestens einem Losrad, häufig sogar mehreren Losrädern, und mit mindestens einem Stellelement wie mit einer Schiebemuffe. Ein Getriebegang wird unter Vermittlung bzw. unter Zuhilfenahme des Synchronisationsdruckstücks eingelegt. Hierbei kann das Synchronisationsdruckstück mehrere Schaltfunktionen ausführen. Eine der Schaltunterstützungsfunktionen ist eine Schaltsperrfunktion. Eine weitere Schaltunterstützungsfunktion ist eine Drehzahlsynchronisationsfunktion. Weitere Funktionen werden in der zuvor bezeichneten Literatur angesprochen und von dieser eingefordert. Bei der Drehzahlsynchronisationsfunktion ist das Ziel, die Drehzahlangleichung beschleunigt zu erreichen. Hierbei wird eine Wellendrehkraft in eine Andruckkraft umgewandelt. Die Wandlung bzw. Umwandlung erfolgt servounterstützt. Die Servounterstützung wird durch eine keilartige Drucklageranordnung gewonnen. Die Servoschräge gelangt in eine Berührung mit der Oberfläche einer Ausnehmung, z. B. einer speziell vorgesehenen Ausnehmung an dem Stellelement oder an dem Getriebegangelement.

Ohne zusätzlich aufzubauen, wird das Drehmoment während der Synchronisation vorteilhaft genutzt. Nach einem Aspekt der vorliegenden Erfindung wird die Teilung innerhalb des Synchronisationsdruckstücks so gestaltet, dass wenigstens zwei Gefügeelemente entstehen, die sowohl Relativbewegungen untereinander wie auch eine Gesamtbewegung des Synchronisationsdruckstücks erlauben.

Das Synchronisationsdruckstück fördert das schnellere Angleichen der unterschiedlichen Drehzahlen zwischen Synchronkörper und abtriebsseitigem Rad, wie z. B. Losrad, und beschleunigt somit den Angleichvorgang bzw. verkürzt diesen.

Vorteilhafte Weiterbildungen lassen sich den nachfolgenden Darstellungen entnehmen.

Die Teilung in den Synchronisationsdruckstücken ist so gestaltet, dass einem Gefügeelement die Bedeutung einer Synchronbrücke zukommt. Die Synchronbrücke kann in wenigstens einen Synchronring, z. B. über ihren Fuß, eingreifen. Das zweite Gefügeelement übernimmt die Aufgabe eines Verstärkungselements. Die beiden Gefügeelemente haben wenigstens einen Freiheitsgrad zueinander. Die Gefügeelemente verharren nicht in einer statischen Relativbeziehung, sondern verändern in Abhängigkeit der äußeren Kraft bzw. der äußeren Kräfte, z. B. aus dem Stellelement und z. B. aus der Nabe, die Lage zueinander. Das Verstärkungselement unterstützt die Anpresskraft auf den Synchronring, die ohne das Verstärkungselement aus dem Stellelement aufzubringen wäre.

Die Oberflächen eines der Gefügeelemente, insbesondere des zweiten Gefügeelements, sind nicht einheitlich gestaltet. So sollte eine der Seiten eine keilförmige Einbuchtung haben. Die Einbuchtung sollte an einer Seite vorhanden sein, die für die Anlagerung an dem Stellelement oder an der Nabe vorgesehen ist. Die Einbuchtung sollte die Drucklager in einen Winkel in einem Winkelbereich von 91 ° bis zu 179° festlegen. Die Drucklager würden dann aufgrund der Einbuchtung eine Dreieckschenkligkeit in einem Wertebereich von 91° zu 179° haben. Die Einbuchtung grenzt das erste Drucklager von dem zweiten Drucklager ab. Durch die Winkelwahl lässt sich ein gutes Anschmiegen an die Krafteinleitungsfläche der Nabe oder des Stellelements realisieren.

Das zweite Gefügeelement baut sich in einer Ausgestaltung um eine Basisplatte herum auf. Die Basisplatte überspannt eine Öffnung in dem ersten Gefügeelement. Die Basisplatte kann als Spannplatte oder als Deckplatte betrachtet werden. An der Basisplatte ist seitlich wenigstens ein Drucklager angebracht. Die Basisplatte hat eine Höhe, die auf die Breite des Drucklagers abgestimmt ist. Als Deckebene wird die breiteste bzw. die größte Seite bezeichnet. Das Drucklager ist Teil einer hierzu rechtwinklig angeordneten Seite. Eine solche Basisplatte bietet eine ausreichende, mechanische Festigkeit, ohne unnötige Dicke zu entfalten.

Aus dem Gefügeelement, das den oberen, unterhalb des Stellelements anzuordnenden Teil des Synchronisationsdruckstücks darstellt, stehen einzelne Bereiche hervor. Die herausreichenden Bereiche aus der Basisplatte können als Vorsprünge bezeichnet werden. Einer der Vorsprünge übernimmt die Funktion einer Sperrleiste. Die Sperrleiste ist für ein Zusammenspiel mit einem Stellelement, wie z. B. mit einer Nut in einer Schiebemuffe, gestaltet. Auf der gegenüberliegenden Seite ist ein Fundament ausgeformt. Das Fundament ragt in das erste Gefügeelement hinein. Die Basisplatte ist beidseitig somit herausgestülpt.

Damit das Fundament zwar als Fundament funktionieren kann, jedoch die Beweglichkeit zwischen den Gefügeelementen gewahrt bleibt, sollte das Fundament mit solchen Oberflächen, z. B. mit Schrägen, ausgestattet sein, dass die Oberflächen als Gleitflächen eine Verschiebung zwischen ihnen erlauben. Die Oberflächen lassen sich z. B. gegengleich zu abstützenden Oberflächen an dem ersten Gefügeelement ausbilden. Die Oberflächen sind für einen Parallelversatz geeignet.

In einer weiteren, für die Massenverteilung besonders günstigen Gestaltung sind die Orientierungen der Vorsprünge aus der Basisplatte gleichsinnig gestaltet.

Die Sperrleiste, hierbei werden natürlich auch an Leisten angelehnte Gestaltungen als Leisten bezeichnet, z. B. Sperrriegel, Sperrpunkte, Sperrnoppel und Sperrfinger, ist für ein Zusammenspiel mit einem Stellelement gestaltet. In einer Ausgestaltung ist die Schiebemuffe mit einer Nut versehen, die in ihren Abmessungen möglichst exakt die Sperrleiste aufnehmen kann, damit dieser Teil des Synchronisationsdruckstücks eine gleichbleibende Horizontallage beibehalten kann, wenn das Stellelement aus der Neutralstellung in eine Gangeinlegestellung verschoben werden sollte. Eine Auswinkelung zwischen einzelnen Teilen des Synchronisationsdruckstücks bleibt weiterhin möglich. Eine Nutführung oder eine Lochführung erlaubt die Bewegung in rotatorischer Richtung.

Das zweite, für die obere Lage bestimmte Gefügeelement kann auch als "X"-Element bezeichnet werden. Das eine Gefügeelement weist eine "X"-artige Taillierung auf. Die Taillierung ist z. B. an der Basisplatte angebracht. Die Taille befindet sich in den Seiten, die rechtwinklig zum Fundament angeordnet sind. Die Taille wird z. B. durch die Gestaltung, die Länge oder durch die Lage der Drucklager geformt. An einer weiteren Seite kann zudem eine Ausbauchung angebracht werden. So würde sich eine Seite als Ausbauchungsseite auszeichnen, während andere Seiten die Taillierungsseiten darstellen.

Eine weitere günstige Gestaltung des einen Gefügeelements ergibt sich aus Trapezen, die miteinander verbunden sind. Hierbei können Schnittebenen in das Synchronisationsdruckstück gelegt werden. Die Schnittebenen können z. B. in die Basisplatte gelegt werden. Wird die Schnittebene günstig gelegt, so lässt sich eine doppeltrapezförmige Schnittebene finden. Trapeze werden u. a. über ihre Trapezbasen beschrieben. Ein entsprechendes Trapez hat zwei parallele Seiten. Die Trapezdiagonalen sind in vorteilhaften Synchronisationsdruckstücken gleich lang. Eine solche Gestaltung fördert die Identität der Druckstücke.

Die Basisplatte des zweiten Gefügeelements lässt sich noch günstiger gestalten, wenn die Basisplatte eine gewisse Nachformung der sie aufnehmenden Nabe des Synchronkörpers hat. In einem solchen Fall hat die Basisplatte die Gestalt eines Zylindermantelsegments. An diesem Zylindermantelsegment sind dann die Drucklagerflächen angebracht. Das Segment des Zylindermantels trägt wenigstens eine Drucklagerfläche. Werden die Richtungen der Drucklagerflächen betrachtet, so können bei möglichst symmetrisch gestalteten Basisplatten zwei zueinander parallel angeordnete Drucklagerflächen identifiziert werden.

Die Wirkung des Verstärkungselements lässt sich weiterhin steigern, wenn nicht vollständig platte, ebene Drucklagerflächen vorhanden sind, sondern die Oberflächen in einer Richtung bogenförmig gestaltet sind. So kann eine Drucklagerfläche in einer Richtung, insbesondere in einer Richtung rechtwinklig zu einer lateralen Erstreckung des Gefügeelements, eine gerade Form und in einer zweiten, dazu rechtwinklig angeordneten Richtung eine bogenförmige Form aufweisen. Lateral beabstandete Drucklagerflächen können eine zueinander geneigte, insbesondere zur Nachbildung eines Ausschnittsegments nachgeführte Richtung einnehmen. Die Drucklagerflächen sind nicht mehr wie ebene, senkrecht stehende Flächen zu betrachten, wenn solche zusätzlichen Oberflächengestaltungen hinzukommen.

Die Vorsprünge an dem zweiten Gefügeelement können in einer besonders vorteilhaften Gestaltung auch mit Prismen verglichen werden. So hat das zweite Gefügeelement in einem solchen Fall zwei prismenartige Strukturen. Die prismenartigen Strukturen bilden die Vorsprünge aus. Die prismenartigen Strukturen können auch mit Doppelpyramidenstumpfformen verglichen werden. Solche Pyramidenstumpfformen haben eine leistenartige Erstreckung, wenn sie mehreckige Pyramidenbasen haben. Die Strukturen erstrecken sich in entgegengesetzte Richtungen, wenn sie auf die Basisplatte bezogen werden. Hierbei sollte das Fundament auf die Oberfläche, die sich an dem Fundament anlegen soll, des ersten Gefügeelements abgestimmt sein.

Die zweite prismenartige Struktur kann kleiner sein als die Struktur des Fundaments. Damit eine ausreichende Schiebekraft auf das zweite Gefügeelement eingebracht werden kann, ist es gelegentlich vorteilhaft, wenn die Oberfläche der prismenartigen Struktur gehärtet ist. Der gehärtete Bereich ist für das Zusammenspiel mit der Schiebemuffe ausgelegt.

Das zweite Gefügeelement ist so beweglich gestaltet, dass eine Bewegung um eine Drehachse herum möglich ist. Die Drehachse sollte vorteilhafter Weise in dem ersten Gefügeelement angeordnet sein. Die Drehachse würde dann durch das erste Gefügeelement durchreichen. Die Drehachse lässt sich durch das erste Gefügeelement im mathematischen Sinne "durchschlagen".

Für die Beweglichkeit zwischen den Gefügeelementen sind leichtgängige Gleitflächen günstig. Gleitflächen können rechteckig ausgelegt sein. Hierbei können die Wände bzw. die Oberflächen der Gefügeelemente als Gleitflächen genommen werden. Einfache geometrische Strukturen sind rechteckige Gleitflächen. So können die Gleitflächen als Rechtecköffnungen ausgestaltet sein. Eine erste Gleitfläche des ersten Gefügeelements ist einer ersten Gleitfläche des zweiten Gefügeelements parallelartig gleichwinklig zugeordnet. Die Gleitflächen laufen parallel aufeinander, um einen Parallelversatz und eine Parallelverschiebung zu ermöglichen. Die Gleitflächen sind aufeinander abgestimmt. Sie sind auf Passung angelegt. Die Gleitflächen haben Passform.

Es hat sich gezeigt, dass stumpfpyramidale Strukturen positiv für die Übertragung von Torsionskräften gewählt werden können. Die Torsionskräfte lassen sich auf eine Wellenachse des Getriebes beziehen. Hierzu bildet sich in einer Getriebesynchronisation eine Torsionskraft aus, die zwischen den Gefügeelementen zu übertragen ist. Die stumpfpyramidale Gefügeerstreckung übernimmt die Übertragung der Torsionskräfte in dem Synchronisationsdruckstück.

Die Langlebigkeit des Synchronisationsdruckstücks kann gesteigert werden, wenn als Material für die Gefügeelemente Hartmetalle ausgewählt werden. So lassen sich Stahlbleche oder auch gesinterte Metalle verwenden, bei denen die kippbewegliche Dauerbelastung nur wenig Abrieb an den Gleitflächen und den sonstigen Oberflächen zulässt.

Das Schaltgetriebe, in dem ein Synchronisationsdruckstück einzubauen ist, kann z. B. als Konussynchronisationsgetriebe ausgelegt sein. Das Konussynchronisationsgetriebe arbeitet mit wenigstens einem Synchronring. Der Synchronring sollte an einer Stelle, an der das Synchronisationsdruckstück eingreifen soll, ein eigenes vorgesehenes Maul haben, in das der Fuß des Synchronisationsdruckstücks einfahren kann. Das Synchronisationsmaul wird seitlich begrenzt. Für die Begrenzung hat das Synchronisationsmaul wenigstens eine Sperrklinke, vorzugsweise zwei Sperrklinken, für jede Seite eine.

Der Synchronisationsvorgang lässt sich mit anderen Worten auch durch das Zusammenspiel der Druckgefügeelemente beschreiben. Die erste Schaltunterstützungsfunktion und die zweite Schaltunterstützungsfunktion werden durch ein erstes Druckgefügeelement vermittelt, der Synchronbrücke. Das zweite Druckgefügeelement, das Verstärkungselement, ist für das Zusammenspiel adaptiert. Ein drittes Druckgefügeelement, der Synchronring, hat eine Ausformung, in die eines der ersten beiden Druckgefügeelemente eingreifen kann. Durch das Zusammenspiel aller drei Druckgefügeelemente entsteht ein vorteilhafter Bewegungsablauf bei der Synchronsierung mit verstärkender Wirkung.

Die Schaltkraft wird während der Synchronisationphase verstärkt. Die Servoschrägen werden dazu benutzt, ohne dass eine Selbstbetätigung sich ereignen kann, einen Gleichlauf zwischen mehreren Getriebegangelementen herzustellen.

Durch die Zweiteilung des Synchronisationsdruckstücks in ein mit mindestens einem Drucklager ausgestattetes Gefügeelement und in ein in einer Nabe anordnenbares zweites Gefügeelement wird die Austauschbarkeit gefördert. Die Möglichkeit der Langlebigkeit wird gesteigert.

### Figurenkurzbeschreibung

Ein Ausführungsbeispiel eines erfindungsgemäßen Synchronisationsgefüges ist in den Zeichnungen dargestellt und wird im Folgenden näher beschrieben, wobei
Figur 1 eine schematische Draufsicht eines Verstärkungselements zeigt;
Figur 2 eine schematische Unteransicht eines Verstärkungselements zeigt;
Figur 3 einen Querschnitt einer Basisplatte mit vier Synchronschrägen zeigt;
Figur 4 einen Querschnitt einer Basisplatte mit zwei gleichseitig angeordneten
   Synchronschrägen zeigt;
Figur 5 einen Querschnitt einer Basisplatte mit zwei gegenseitig diagonal angeordneten
   Synchronschrägen zeigt;
Figur 6 einen Querschnitt einer Basisplatte mit einer einzelnen Synchronschräge zeigt;
Figur 7 ein Verstärkungselement in räumlicher Perspektive mit Schnittebene zeigt;
Figur 8 eine schematische Darstellung einer Synchronbrücke zeigt;
Figur 9 einen schematischen Ausschnitt eines Synchronkörpers mit Nabenausnehmung zeigt;
Figur 10 eine schematische Anordnung eines Synchronisationsdruckstücks zwischen zwei
   Synchronringbögen zeigt;
Figur 11 einen schematischen Ausschnitt eines Zahnradwechselgetriebes mit
   Synchronisationsdruckstück in Explosionsdarstellung zeigt; und
Figur 12 einen schematischen Ausschnitt eines Zahnradwechselgetriebes mit Synchronisationsdruckstück in einer funktionalen Anordnung zeigt.

### Figurenbeschreibung

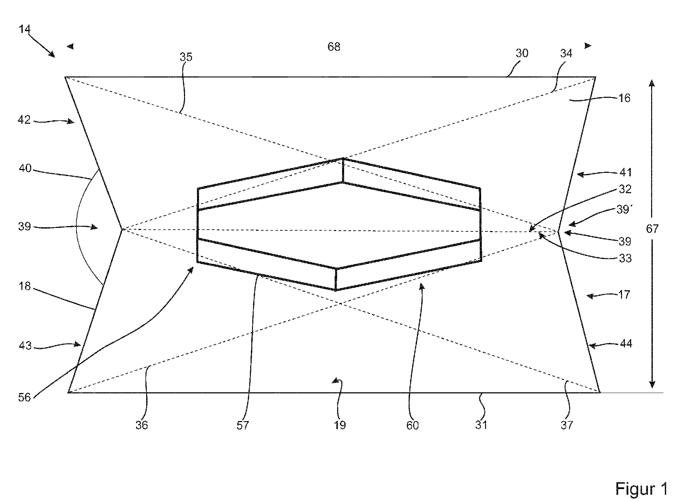

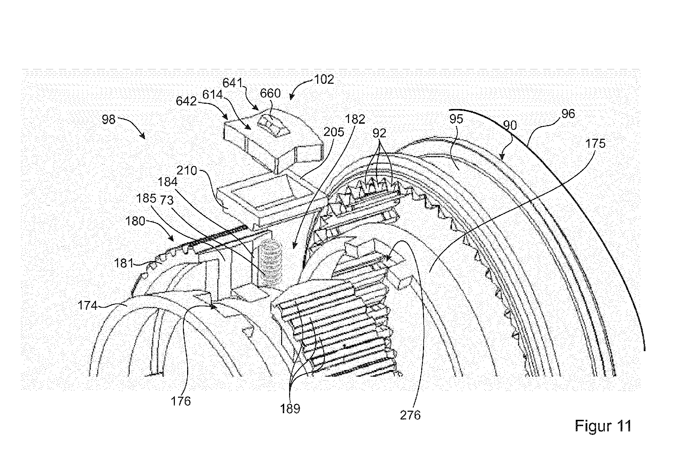

Figur 1 zeigt ein Verstärkungselement 14 als ein Gefügeelement eines Synchronisationsdruckstücks (ohne Bezugszeichen) in Draufsicht. Auf einer Basisplatte 16 ist mittig eine prismatisch geformte Sperrleiste 60 angeordnet. Die Sperrleiste 60 bildet einen ersten Stumpf einer Doppelpyramidenstumpfform 56, die sich von einer ersten Pyramidenbasis 57 auf der Verstärkungselementoberfläche 19 pyramidal erhebt. Die Basisplatte 16 des Verstärkungselements 14 weist in einer lateralen Richtung 68 eine Taillierung 39 auf. Senkrecht zu der lateralen Richtung 68 erstreckt sich die Basisplatte 16 über die Längserstreckung 67. Die Längserstreckung 67 ergibt sich durch die parallele Anordnung der ersten Trapezbasis 30 zur zweiten Trapezbasis 31, deren zugeordneten Trapeze über die jeweils zugehörige erste parallele Seite 32 und über die zweite parallele Seite 33 ineinander übergehen. Somit verlaufen die erste parallele Seite 32 und die zweite parallele Seite 33 entlang der Taillierung 39 der Basisplatte 16. Senkrecht zur Figurenebene erstreckt sich die Basisplattenseite 17, hier als extreme Begrenzungslinie der Basisplatte 16 erkennbar. Die Basisplattenseite 17 umfasst somit die erste Trapezbasis 30 und die zweite Trapezbasis 31, welche parallel beabstandet auf einer Seite durch die erste Servoschräge 41 und die vierte Servoschräge 44 sowie auf der gegenüberliegenden Seite durch die zweite Servoschräge 42 und die dritte Servoschräge 43 miteinander verbunden sind. Die doppeltrapezartige Ausformung der Basisplatte 16 lässt sich durch eine erste Trapezdiagonale 34 und eine zweite Trapezdiagonale 35 beschreiben, die sich jeweils von einer äußeren Erstreckung in lateraler Richtung 68 der ersten Trapezbasis 30 diagonal über die Basisplatte 16 zur Taille 39' erstrecken. Entsprechend ist die dritte Trapezdiagonale 36 bzw. die vierte Trapezdiagonale 37 in Figur 1 von der zweiten Trapezbasis 31 diagonal über die Basisplatte 16 zu der Taille 39' gezogen. In dieser Ausführungsform des Verstärkungselements 14 sind alle Trapezdiagonalen 34, 35, 36, 37 gleich lang. Die Taillierung 39 wird durch den Einbuchtungswinkel 40 gebildet, der exemplarisch zwischen der zweiten Synchronschräge 42 und der dritten Synchronschräge 43 eingezeichnet ist und entsprechend zwischen der ersten Synchronschräge 41 und der vierten Synchronschräge 44 vorliegt. Damit weist die Basisplatte 16 durch die Taillierung 39 eine Gestalt auf, die einer lateinischen Zahl "X" entspricht. Die Sperrleiste 60 ist für eine Anordnung in einer Schiebemuffennut (nicht dargestellt) vorgesehen. Mit Hilfe der Verstärkungselementfläche 18 kann das Verstärkungselement eine zusätzliche Kraft auf die Schiebemuffe (siehe Figur 11) ausüben.

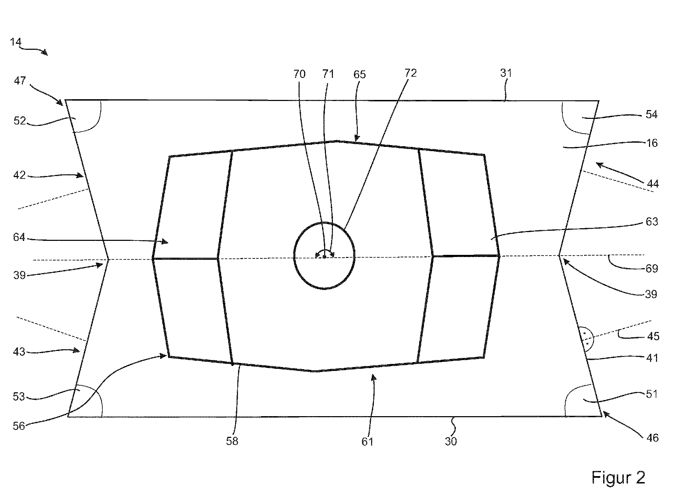

In Figur 2 ist das Verstärkungselement 14 in einer zu Figur 1 unterseitig entgegengerichteter Betrachtung dargestellt. Zu erkennen ist die doppeltrapezartige Ausdehnung zwischen der ersten Trapezbasis 30 und der zweiten Trapezbasis 31 der Basisplatte 16. An der Taillierung 39, die entlang der Flacherstreckung 69 erfolgt, verbinden sich die zwei trapezartigen Strukturen der Basisplatte 16. Die erste Trapezbasis 30 wird mit dem ersten Servoschrägenwinkel 51 in die erste Synchronschräge 41 fortgesetzt. An der Taillierung 39 geht die erste Synchronschräge 41, die auch durch eine Richtung der Orthogonale 45 gekennzeichnet ist, in die vierte Synchronschräge 44 mit zugeordneter Drucklagerorthogonale (ohne Bezugszeichen) über. Die vierte Synchronschräge 44 geht an einer Ecke der Basisplatte 16 mit dem vierten Servoschrägenwinkel 54 in die zweite Trapezbasis 31 über. Die Umfangsfortsetzung der Basisplatte 16 am gegenüberliegenden Ende der zweiten Trapezbasis 31 erfolgt unter dem zweiten Servoschrägenwinkel 52 mit der zweiten Synchronschräge 42 bis zur Taillierung 39, wo der Übergang in die dritte Synchronschräge 43 erfolgt. Die dritte Synchronschräge 43 mündet unter dem dritten Servoschrägenwinkel 53 in die erste Trapezbasis 30, wodurch ein äußerer Umfang der Basisplatte 16 vorgegeben ist. Mittig auf der Basisplatte 16 ist die Erhebung des Fundaments 61 angedeutet, welches mit der zweiten Pyramidenbasis 58 über der Basisplatte 16 steht. Hierbei wird die zweite Pyramidenbasis 58 von der beschriebenen Umfangsform der Basisplatte 16 überragt. Zu dem ersten Drucklager 41 gehört die Drucklagerfläche 46. Zu dem zweiten Drucklager 42 gehört die Drucklagerfläche 47. Das Fundament 61 stellt einen zweiten Teil zu dem ersten, in Figur 1 erwähnten Stumpf des Doppelpyramidenstumpfs 56 dar. Dieser Teil des Doppelpyramidenstumpfs 56 in Figur 2 zeigt die erste pyramidale Wand 63 und die zweite pyramidale Wand 64, die in der Flacherstreckung 69 einander gegenüber angeordnet sind. In dieser Ausführung sind die erste Wand 63 und die zweite Wand 64 mittig mit einer Pyramidenkante versehen. Die Wände 63, 64 stehen miteinander über Führungswände wie über Führungswand 65 in Verbindung. Führungswand 65 weist ebenfalls eine mittige Kante auf, sodass sich eine zweite Pyramidenbasis mit achteckiger Grundfläche ergibt. In weiteren Ausführungen (nicht dargestellt) kann die Pyramidenbasis rechteckig gestaltet sein. Andere, vorteilhafte Ausführungen (nicht dargestellt) weisen eine zweite polygonale Pyramidenbasis auf, die sich grenzwertig auch als kreisförmige oder ovalelliptische Kegelbasis ausführen lässt. In dem Fundament 61 ist mittig die kreisförmige Federaufnahme 72 eingezeichnet, in der eine Feder (nicht dargestellt) zylinderförmig umschlossen endet. Senkrecht zur Zeichenebene der Figur 2 erstreckt sich die Drehachse 70, um die das Verstärkungselement 14 in einer Winkelstellung wie die Winkelung 71 verbringbar ist.

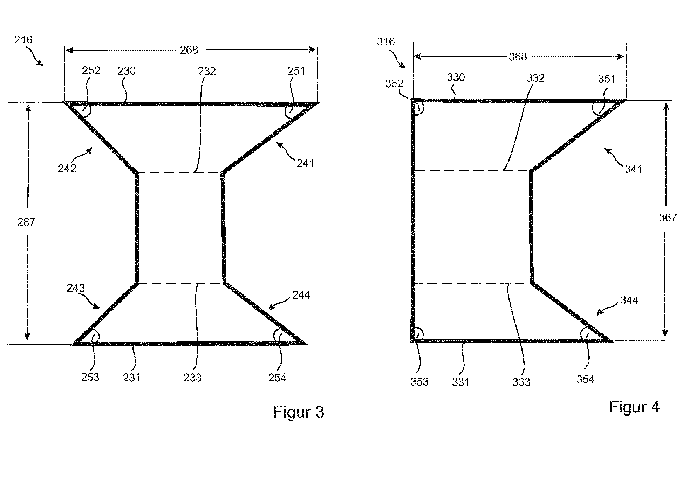

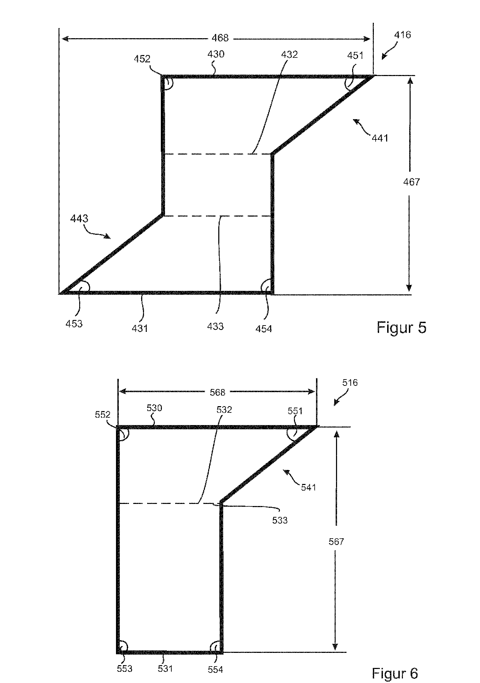

Figur 3, Figur 4, Figur 5 und Figur 6 zeigen Varianten der Basisplatte 216, 316, 416 und 516, die sich von einer in Figur 1 bzw. Figur 2 diskutierten Grundform der Basisplatte 16 ableiten. Daher werden die Varianten von Figur 3, Figur 4, Figur 5 und Figur 6 mit den jeweiligen Komponenten im Zusammenhang diskutiert. Die Basisplatten 216, 316, 416 und 516 weisen jeweils eine laterale Erstreckung 268, 368, 468 und 568 sowie eine Längserstreckung 267, 367, 467 und 567 auf. Diese werden durch die zueinander beabstandete und parallel verlaufende erste Trapezbasis 230, 330, 430, 530 und zweite die Trapezbasis 231, 331, 431, 531 mit den jeweils zugeordneten ersten parallelen Seite 232, 332, 432, 532 und zweiten parallelen Seite 233, 333, 433, 533 gebildet. Die erste parallele Seite 232 in Figur 3 ist von der zweiten parallelen Seite 233 durch eine rechteckartige Struktur der Basisplatte 216 beabstandet. In entsprechender Weise sind in den Figuren 4 und 5 die erste parallele Seite 332, 432 und die zweite parallele Seite 333, 433, in den jeweiligen Basisplatten 316, 416 rechteckartig beabstandet. In Figur 5 fallen die erste parallele Seite 532 und die zweite parallele Seite 533 zusammen. Figur 3 zeigt die Basisplatte 216 mit vier Drucklagern 241, 242, 243 und 244, welche jeweils einen Winkel 251, 252, 253, 254 zu einer Trapezbasis 230, 231 einnehmen. In Figur 4 sind zwei Drucklager 341, 344 an der Basisplatte 316 angebracht, die jeweils einen Winkel 351, 354 zur zugeordneten Trapezbasis 330, 331 bilden. Die in der lateralen Erstreckung 368 gegenüberliegend angeordneten Servoschrägenwinkel 352, 353 von ca. 90° entsprechen einer geradlinigen Verbindung zwischen Trapezbasis 330 und Trapezbasis 331, sodass auf dieser Seite der lateralen Erstreckung 368 der Basisplatte 316 keine Drucklager bzw. Servoschrägen vorliegen. Figur 5 gibt eine Basisplatte 416 mit zwei Drucklagern 441, 443 wieder. Das erste Drucklager 441 ist dabei in Bezug auf die Erstreckungsrichtung 468 zum dritten Drucklager 443 diagonalartig gegenseitig beabstandet angeordnet. Dabei ist der dem ersten Drucklager bzw. der ersten Synchronschräge 441 zugeordnete erste Servoschrägenwinkel 451 kleiner als der dem dritten Drucklager 443 zugeordnete dritte Servoschrägenwinkel 453. Der zweite Servoschrägenwinkel 452 und der dritte Servoschrägenwinkel 454 betragen jeweils ca. 90°. Die Basisplatte 516 von Figur 6 weist nur eine erste Synchronschräge bzw. erstes Drucklager 541 auf, mit einem ersten Servoschrägenwinkel 551. Die drei weiteren Servoschrägenwinkel 552, 553, 554 betragen jeweils ca. 90°. Durch die Ausführung der Basisplatte 316 in Figur 4 wird eine Servowirkung zur Synchronisation an einem ersten und einem zweiten Losrad (nicht dargestellt) bei jeweils gleicher Laufrichtung wechselweise ermöglicht. Die Drucklager 441 und 443 in Figur 5 unterstützen eine Synchronisationsservowirkung an einem ersten und zweiten Losrad (nicht dargestellt), wobei das erste Losrad gegenläufig zum zweiten Losrad verwendet betrieben wird. Mit der Konfiguration von Figur 6 lässt sich, insbesondere durch das erste Drucklager 541 als einziges Drucklager, eine Servosynchronisation an einem Losrad (nicht dargestellt) in einer Drehrichtung (nicht dargestellt) erzielen.

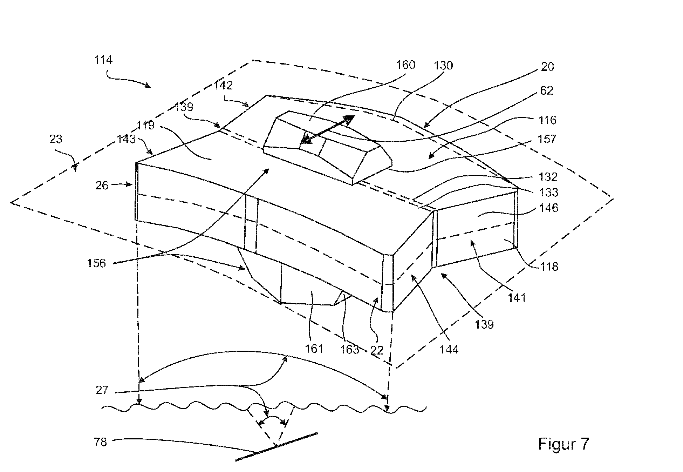

In Figur 7 ist eine Ausführung eines Verstärkungselements 114 perspektivisch wiedergegeben. Die Basisplatte 116 ist ebenmittig zur Schnittebene 23 angeordnet und stellt ein zylinderflächiges Ausschnittssegment 26 aus einem um die Wellenachse 78 gewickelten Rohr (nicht dargestellt) dar. Somit verlaufen die vier Drucklager 141, 142, 143 und 144 in einer geneigten Richtung 27 zueinander. Die Neigungsrichtung 27 bezieht sich dabei radialartig rechtwinklig auf die Wellenachse 78. Die Basisplatte 116 weist weiterhin eine Taillierung 139 auf. Einem Drucklager, wie dem vierten Drucklager 144, ist eine abgewinkelte Seite, wie die abgewinkelte Seite 22 zugeordnet. Drucklager, wie das erste Drucklager 141, bilden eine äußerste Verstärkungselementfläche, wie die Fläche 118. Die Ausdehnung eines Drucklagers, wie das Drucklager 141, erstreckt sich über eine Gesamtfläche, wie die erste Drucklagerfläche 146, und weist auf der gesamten Fläche eine gleichmäßige Oberflächenvergütung zur Verschleißminderung auf. Die Taillierung 139 wird von den Parallelseiten 132, 133 überspannt, die fertigungsbedingt geringfügig zueinander parallel beabstandet sind. Die Parallelseiten 132, 133 sind Hilfslinien, die zur Verdeutlichung der Struktur der Basisplatte 116 jeweils einer Trapezbasis, wie der ersten Trapezbasis 130, zugeordnet gezeichnet sind. Das Verstärkungselement 114 weist gegenüber der ersten Trapezbasis 130 eine Ausbauchung 20 auf. Deutlich erhebt sich von der Basisplatte 116 der Doppelpyramidenstumpf 156. Der untere Teil des Doppelpyramidenstumpfs 156 umfasst das Fundament 161 mit einer ersten Wand 163. Der obere Teil des Doppelpyramidenstumpfs 156 wird durch die Sperrleiste 160 gebildet, die mit der rechteckigen ersten Pyramidenbasis 157 in die Basisplatte 116 übergeht. Dabei wird das Verstärkungselement 114 über die Sperrleiste 160 in einer Schiebemuffenkraftrichtung 62 bei Betätigung mit einer gerichteten Betätigungskraft in einem Schaltvorgang bewegt. Damit kann die Schiebemuffe (nach Figur 11) über die Sperrleiste 160 auf der Verstärkungselementoberfläche 119 eine Verschiebekraft dem Verstärkungselement 114 und so dem Gefüge eines gesamten Synchronisationsdruckstücks (nicht in Gänze in Figur 7 dargestellt) zufügen.

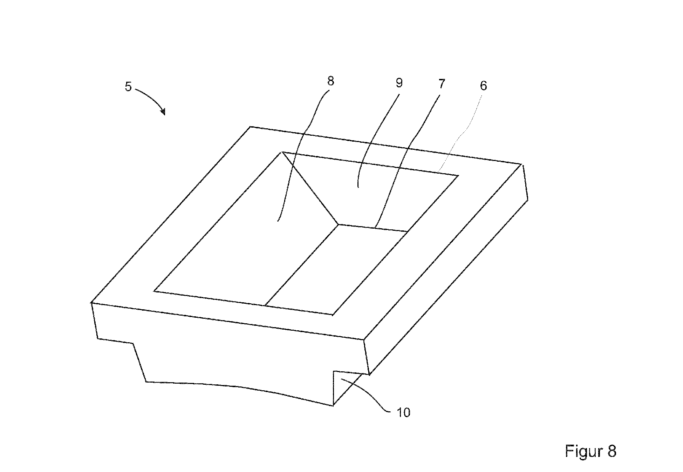

Figur 8 stellt eine Synchronbrücke 5 dar, die als unteres Gefügeelement eines (bezugszeichenlosen) Synchronisationsdruckstücks ein in Figur 7 dargestelltes Verstärkungselement 114 als weiteres Gefügeelement aufnimmt. Die Synchronbrücke 5 in Figur 8 weist fensterartig mittig eine Rechtecköffnung 6, 7 auf, wobei eine größere, erste Rechtecköffnung 6 in eine kleinere, zweite Rechtecköffnung 7 übergeht. Im Übergang zwischen den Rechtecköffnungen 6 und 7 werden schräg gewinkelte Innenwände, wie die erste Innenwand 8, und rechtwinklig verlaufende Innenwände, wie die zweite Innenwand 9, ausgeformt. Die zweite Innenwand 9 entsteht durch bereichsweise Deckungsgleichheit der ersten und zweiten Rechtecköffnung 6 und 7. Der Fuß 10 der Synchronbrücke 5 ist der Seite entgegengerichtet, die zur Aufnahme des Verstärkungselements 114 aus Figur 7 dient, wobei sich das Fundament 161 in die Rechtecköffnung 6, 7 aus Figur 8 erstrecken wird.

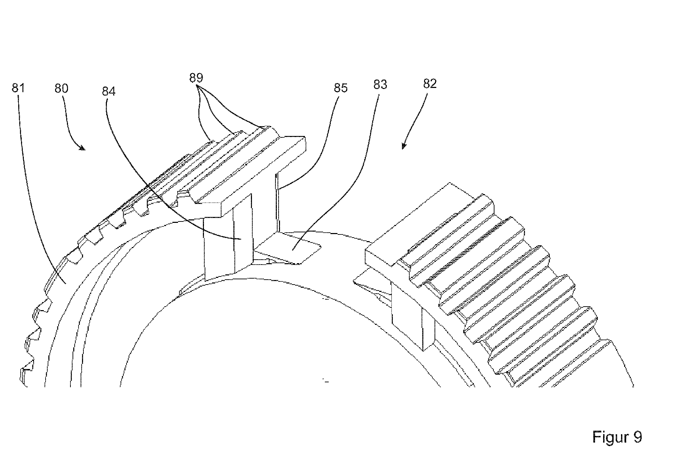

Figur 9 ist ein schematischer Ausschnitt eines Synchronkörpers 80, der im Verlauf der Nabe 81 eine Nabenausnehmung 82 aufweist. Die Nabenausnehmung 82 ist zur Aufnahme und Führung eines Synchronisationsdruckstücks (wie in die zuvor angesprochenen Figuren zu sehen) vorgesehen. Die an der Nabenausnehmung 82 unterbrochene Synchronkörperzahnung 89 führt eine Schiebemuffe (siehe Figur 11), die in einem Schaltvorgang zu betätigen ist. Unterhalb der gezahnten Nabe 81 wird die Nabenausnehmung 82 durch gewinkelte Servoführungen, wie die erste Servoführung 84 und die zweite Servoführung 85, begrenzt. Der Winkel (kein Bezugszeichen) der Servoführungen 84, 85 beträgt ca. 30° zur Nabenausnehmung 82 im Bereich der Synchronkörperzahnung 89. In einer weiteren nicht dargestellten Ausführung beträgt der Winkel ca. 42°. Andere nicht dargestellte Ausführungen weisen eine oder zwei Servoführungen mit unterschiedlichen Winkeln, wie z.B. ein Winkel von 22° und ein Winkel von 35 auf. Eine untere Begrenzung bzw. Auflage für ein Synchronisationsdruckstück (nicht dargestellt) bilden Fußführungen, wie die Fußführung 83. Die erste Servoführung 84 und die zweite Servoführung 85 sind mit Bezug auf Figur 1 einer ersten Synchronschräge 41 bzw. einer vierten Synchronschräge 44 eines Verstärkungselements 14 angepasst, insbesondere mit gleichen Winkelungen im Fall der ersten Synchronschräge 41 und einer größeren Winkelung für die Synchronschräge 44 mit Bezug auf die jeweiligen zugeordneten Servoführungen 84 bzw. 85 aus Figur 9. Die Fußführung 83 in Figur 9 ist zur Führung eines Fußes (nicht dargestellt), wie dem Fuß 10 der Synchronbrücke 5 aus Figur 8 ausgestaltet.

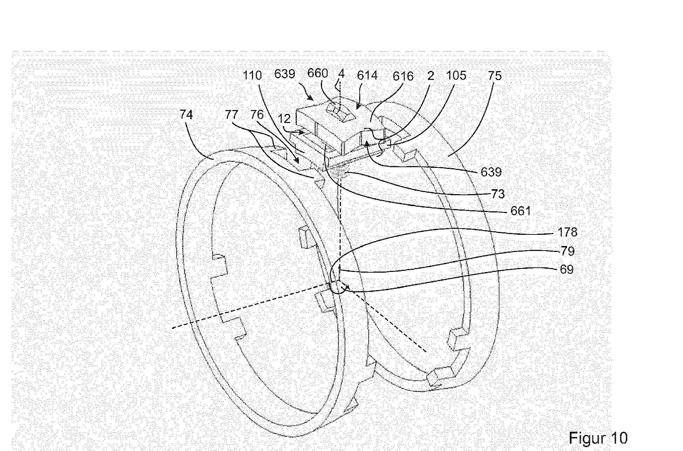

Ein Synchronisationsdruckstück 2 ist in Figur 10 abgebildet, wobei das Synchronisationsdruckstück 2 aus einem Verstärkungselement 614 und einer Synchronbrücke 105 als Gefügeelemente zusammengefügt wurde. Die Gefügeelemente 614, 105 liegen in einer Passform 12 zueinander, wobei das Fundament 661 des Verstärkungselements 614 mit einer eingesetzten Feder 73 in die Synchronbrücke 105 hinein- bzw. hindurchragt. Das Verstärkungselement 614 mit der Basisplatte 616 umfasst weiterhin die Sperrleiste 660. Gut erkennbar ist die Taillierung 639 der Basisplatte 616. Der Fuß 110 der Synchronbrücke 105 entspricht passgenau in einer Dimension der Abmessung eines dazu angeordneten Synchronringmauls 76. Das Synchronringmaul 76 wird durch eine Synchronringklinke 77 als Doppelfortsatz eines Synchronrings, wie dem ersten Synchronring 74, in einer Richtung entlang einer Wellenachse 178 gebildet. Ein zweiter Synchronringbogen 75 ist dem Fuß 110 auf einer dem ersten Synchronringbogen 74 beabstandeten Seite des Synchronisationsdruckstücks 2 zugeordnet, sodass der erste Synchronringbogen 74 und der zweite Synchronringbogen 75 durch das Synchronisationsdruckstück 2 wechselseitig betätigbar ist. Die Wellenachse 178 ist als Orientierungshilfe rechtwinklig zur Fundamentachse 79 vorhanden, die einer Erstreckungsrichtung des Fundaments 661 des Verstärkungselements 614 entspricht. Damit wird eine rechtwinklige Flächenerstreckung 69 an der Fundamentachse 79 ersichtlich. Das Synchronisationsdruckstück 2 lässt sich auch anhand der Achse durch den Schwerpunkt, also der Schwerpunktachse 4, bestimmen. In die gleiche Richtung, wie die Schwerpunktachse 4 verläuft, erstreckt sich das Fundament 661 aus der Basisplatte 616.

Ein Ausschnitt eines Zahnradwechselgetriebes 98 ist in Figur 11 dargestellt, wobei auf eine detaillierte Zeichnung von Losrädern zur Verbesserung der Übersichtlichkeit verzichtet wurde. Ein erstes Losrad (nicht dargestellt) und ein weiteres Losrad 96 sind in dem Zahnradwechselgetriebe 98 jeweils dem ersten Synchronringbogen 174 bzw. dem zweiten Synchronringbogen 175 zugeordnet. Mit Hilfe der Synchronringbögen 174, 175 ist wechselweise eine drehfeste Verbindung zu den Losrädern (nicht dargestellt) synchronisierbar. Zur Verdeutlichung der Anordnung im Zahnradwechselgetriebe 98 sind die Komponenten erster Synchronringbogen 174, Synchronkörper 180 mit Nabe 181 und Nabenausnehmung 182, sowie die Gefügeeinheiten des Synchronisationsdruckstücks 102, weiterhin die Schiebemuffe 90 und der zweite Synchronringbogen 175 zueinander beabstandet gezeichnet. An der Schiebemuffe 90 ist die Schaltnut 95 als umlaufende Nut erkennbar, in die ein Schaltmechanismus (nicht dargestellt) zur Betätigung der Schiebemuffe 90 eingreift. Die Schiebemuffe 90 ist mit der Schiebemuffenzahnung 92 in einer dazu angepassten Synchronkörperzahnung 189 führbar. Eine Betätigung des Synchronisationsdruckstücks 102 erfolgt über eine Innennut (nicht dargestellt) der Schiebemuffe 90, welche eine Unterbrechung der Schiebemuffenzahnung 92 darstellt. Die Sperrleiste 660 des Verstärkungselements 614 greift in die genannte innere Nut (nicht dargestellt) ein. Weiterhin ist in Figur 11 eine Zusammenstellung des Synchronisationsdruckstücks 102 aus dem Verstärkungselement 614 und der Synchronbrücke 205 einschließlich einer Feder 73 ersichtlich. Der Fuß 210 der Synchronbrücke 205 ist einem Synchronringmaul 176 des ersten Synchronringbogens 174 und einem Synchronringmaul 276 des zweiten Synchronringbogens 175 schlüssig angepasst. Die Nabe 181 ist zur Nabenausnehmung 182 hin von Servoführungen, wie der ersten Servoführung 184 und der zweiten Servoführung 185, begrenzt, die sich angewinkelt bis in den Bereich der Synchronkörperzahnung 189 erstrecken. Dabei ist der ersten Synchronschräge bzw. dem ersten Drucklager 641 die erste Servoführung 184 und der zweiten Synchronschräge 642 die zweiten Servoführung 185 zugeordnet. Durch diese Anordnung gewinkelter Flächen wird eine Drehkraft des Synchronkörpers 180 zu einer Andruckkraft eines Synchronisationsdruckstücks 102 umgewandelt. Insbesondere unterstützen die erste Synchronschräge 641 an der ersten Servoführung 184 eine Bewegung der Synchronbrücke 205 in Richtung des Synchronringmauls 276 des zweiten Synchronrings 175. So erfolgt eine Synchronisation einer Drehbewegung durch Kraftübertragung auf das Losrad 96. Bei Betätigung eines Schaltvorgangs in entgegengesetzter Richtung wird eine Drehkraftunterstützung der Synchronisation durch Kraftübertrag zwischen der zweiten Servoführung 185 und der zweiten Synchronschräge bzw. dem zweiten Drucklager 642 in das Synchronringmaul 176 und auf den ersten Synchronringbogen 174 bewirkt. Somit erfolgt eine Beschleunigung der Synchronisation, d. h. der Herstellung eines Gleichlaufs zwischen dem ersten Synchronringbogen 174 und einem Losrad (nicht dargestellt), wie dem Losrad 96.

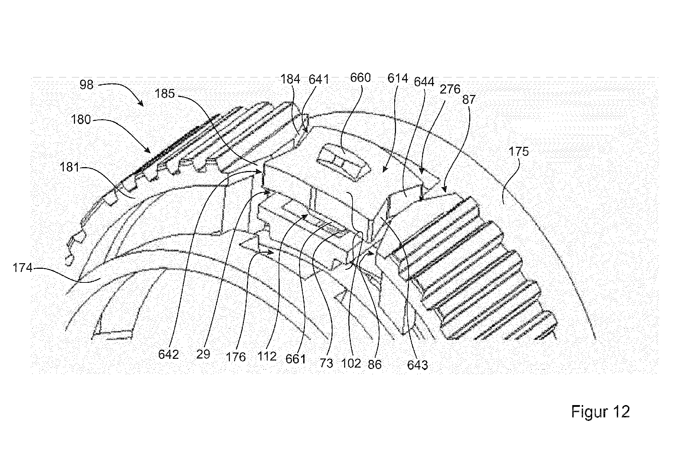

In Figur 12 ist eine Zusammenfügung des Ausschnitts eines Zahnradwechselgetriebes 98 entsprechend Figur 11 gezeigt, wobei auf Darstellung einer Schiebemuffe und von Losrädern zur besseren Übersichtlichkeit verzichtet wurde. Die Gefügeelemente, wie das Verstärkungselement 614 und die Synchronbrücke (ohne Bezugszeichen) des Synchronisationsdruckstücks 102, sind zwischen den Servoführungen 184, 185, 86, 87 des Synchronkörpers 181 dargestellt. Das Synchronringmaul 176 des ersten Synchronringbogens 174 und das Synchronringmaul 276 des zweiten Synchronringbogens 175 sind beidseitig zum Synchronkörper 180 dem Synchronisationsdruckstück 102 zugeordnet. Die Anordnung zeigt insbesondere eine Beabstandung zwischen den Drucklagern 641, 642 und den entsprechenden Servoführungen 184, 185 auf der einen Seite des Synchronisationsdruckstücks 102 sowie eine Beabstandung zwischen den Drucklagern 643 und 644 zu den entsprechenden Sevoführungen 86, 87 auf der gegenüberliegenden Seite. Diese Stellung des Synchronisationsdruckstücks 102 entspricht einer Neutralposition, in der keine Synchronisation erfolgt. Insbesondere ist eine Selbstbetätigung ausgeschlossen. Ein drehkraftverstärkter Synchronisationsvorgang wird durch eine Betätigung an der Sperrleiste 660 bewirkt. Das Fundament 661 wird über die Feder 73 gegen den Synchronkörper 180 abgestützt. Im Rahmen der Passform 112 ist das Verstärkungselement 614 als Gefügeelement innerhalb des Synchronisationsdruckstücks 102 in horizontaler Lage 29 beweglich. Dabei erfolgt insbesondere eine Bewegungsführung der Synchronisationsbrücke (ohne Bezugszeichen) durch Bewegungen des Verstärkungselements 114 in Richtung des ersten Synchronringbogens 174 oder wahlweise in einer entgegengesetzten Richtung zum zweiten Synchronringbogen 175. Die Beabstandungen des Synchronisationsdruckstücks 102 zum Synchronkörper 180, insbesondere in seitlicher Richtung, lassen zudem eine rotatorische Kippbewegung in der Horizontallage 29 zu. Durch diese vorteilhafte Kombination von angewinkelten Drucklagern 641, 642, 643, 644 und Servoführungen 184, 185, 86, 87 lässt sich somit vorteilhaft ein Gangwechsel erleichtern, wobei einer an der Sperrleiste 660 aufzuwendenden Kraft eine umgewandelte Drehkraft des Synchronkörpers 180 bei der Synchronisation zugefügt wird. Zur Synchronisation ist damit ein reduzierter Schaltkrafteintrag durch eine manuelle, elektrische oder hydraulische Schaltvorrichtung (nicht dargestellt) ausreichend.

### Bezugszeichenliste

| Bezugszeichen | Bedeutung |
|---|---|
| 2, 102 | Synchronisationsdruckstück |
| 4 | Schwerpunktachse |
| 5, 105,205 | Synchronbrücke |
| 6 | erste Rechtecköffnung |
| 7 | zweite Rechtecköffnung |
| 8 | erste Innenwand |
| 9 | Zweite Innenwand |
| 10, 110,210 | Fuß |
| | |
| 12, 112 | Passform |
| | |
| 14, 114, 614 | Verstärkungselement |
| 16, 116, 216, 316, 416, 516, 616 | Basisplatte |
| 17 | Basisplattenseite |
| 18, 118 | äußerste Verstärkungselementfläche |
| 19, 119 | Verstärkungselementoberfläche |
| 20 | Ausbauchung |
| 22 | Abgewinkelte Seite |
| 23 | Schnittebene |
| 26 | Ausschnittssegment |
| 27 | geneigte Richtung |
| 29 | Horizontallage |
| 30, 130, 230, 330, 430, 530 | erste Trapezbasis |
| 31,231,331,431,531 | zweite Trapezbasis |
| 32, 132, 232, 332, 432, 532 | erste parallele Seite |
| 33, 133, 233, 333, 433, 533 | zweite parallele Seite |
| 34 | erste Trapezdiagonale |
| 35 | zweite Trapezdiagonale |
| 36 | dritte Trapezdiagonale |
| 37 | vierte Trapezdiagonale |
| | |
| 39, 139, 639 | Taillierung bzw. Einbuchtung |
| 39' | Taille |
| 40 | Einbuchtungswinkel |
| 41, 141, 241, 341, 441, 541, 641 | erste Synchronschräge bzw. erstes Drucklager |
| 42, 142, 242, 642 | zweite Synchronschräge bzw. zweites Drucklager |
| 43, 143, 243, 443, 643 | dritte Synchronschräge bzw. drittes Drucklagers |
| 44, 144, 244, 344, 644 | vierte Synchronschräge bzw. viertes Drucklager |
| 45 | Orthogonale auf Drucklager |
| 46, 146 | erste Drucklagerfläche |
| 47 | zweite Drucklagerfäche |
| 51, 251, 351, 451, 551 | erster Servoschrägenwinkel |
| 52,252,352,452,552 | zweiter Servoschrägenwinkel |
| 53, 253, 353, 453, 553 | dritter Servoschrägenwinkel |
| 54, 254, 354, 454, 554 | vierter Servoschrägenwinkel |
| | |
| 56, 156 | Doppelpyramidenstumpf |
| 57, 157 | erste Pyramidenbasis |
| 58 | zweite Pyramidenbasis |
| 60, 160, 660 | Sperrleiste |
| 61, 161, 661 | Fundament |
| 62 | Schiebemuffenkraftrichtung |
| 63, 163 | erste Wand |
| 64 | zweite Wand |
| 65 | Führungswand |
| | |
| 67,267,367,467,567 | Längserstreckung |
| 68, 268, 368, 468, 568, 568 | laterale Richtung bzw. laterale erstreckung |
| 69 | rechtwinklig Flacherstreckung |
| 70 | Richtung rechtwinklig zu lateraler Erstreckung, insb. Drehachse |
| 71 | Winkelung |
| 72 | Federaufnahme |
| 73 | Feder |
| 74, 174 | erster Synchronringbogen |
| 75, 175 | zweiter Synchronringbogen |
| 76 | Synchronringmaul |
| 77 | Synchronringklinke |
| 78, 178 | Wellenachse |
| 79 | Fundamentachse |
| 80, 180 | Synchronkörper |
| 81, 181 | Nabe |
| 82, 182 | Nabenausnehmung |
| 83 | Fußführung |
| 84, 184 | erste Servoführung |
| 85, 185 | zweite Servoführung |
| 86 | dritte Servoführung |
| 87 | vierte Servoführung |
| 89, 189 | Synchronkörperzahnung |
| 90 | Schiebemuffe |
| 92 | Schiebemuffenzahnung |
| 95 | Schaltnut |
| 96 | Losrad |
| | |
| 98 | Zahnradwechselgetriebe |

## Patentansprüche

1. Synchronisationsdruckstück (2, 102) eines Zahnradwechselgetriebes (98), umfassend mindestens zwei Gefügeelemente (5, 105, 205; 14, 114, 614; 73; 74, 174; 75,175) ein erstes Gefügeelement (5, 105, 205) und ein zweites Gefügeelement (14, 114, 614), für die Drehzahlsynchronisation von Getriebegangelementen (74, 174, 75, 175, 80, 180, 81, 181,90,96)
**dadurch gekennzeichnet, dass**
das Synchronisationsdruckstück (2, 102) als Servosynchronisationsdruckstück mindestens ein quer zu einer Achse durch das Synchronisationsdruckstück (2, 102) verlaufendes, insbesondere an einer äußersten Fläche (17; 18, 118; 46, 146; 47) eines der Gefügeelemente (5, 105, 205; 14, 114, 614; 73; 74, 174; 75,175) vorhandenes, Drucklager (41, 141, 241, 341, 441, 541, 641; 42, 142, 242, 642; 43, 143, 243, 443, 643; 44, 144, 244, 344, 644) aufweist, wodurch bei einer lateralen Krafteinwirkung auf das Drucklager (41, 141, 241, 341, 441, 541, 641; 42, 142, 242, 642; 43, 143, 243, 443, 643; 44, 144, 244, 344, 644) das Synchronisationsdruckstück (2, 102) verschoben entlang einer Fläche (46, 146; 47) des Drucklagers (41, 141, 241, 341, 441, 541, 641; 42, 142, 242, 642; 43, 143, 243, 443, 643; 44, 144, 244, 344, 644) in eine ausgewinkelte Lage (71) aus einer planparallelen Relativlage (29) des ersten Gefügeelements (5, 105, 205) zu dem zweiten Gefügeelement (14, 114, 614) überwechseln kann.

2. Synchronisationsdruckstück (2, 102) nach Anspruch 1, **dadurch gekennzeichnet, dass** das Synchronisationsdruckstück (2, 102) als erstes Gefügeelement eine Synchronbrücke (5, 105, 205), insbesondere mit wenigstens einem, vorzugsweise zwei spiegelbildlich zueinander angeordneten, Synchronringbogen (74, 174; 75, 175) umfasst, in die das zweite Gefügeelement, insbesondere mit wenigstens einem Bewegungsfreiheitsgrad, in der Gestalt eines Verstärkungselements (14, 114, 614) eingreift.

3. Synchronisationsdruckstück (2, 102) nach einem der vorhergehenden Ansprüche,
**dadurch gekennzeichnet, dass**
ein Gefügeelement (5, 105, 205; 14, 114, 614; 73; 74, 174; 75,175), insbesondere das zweite Gefügeelement (14, 114, 614), auf mindestens einer, entlang einer Längserstreckung (67, 267, 367, 467, 567) ausgedehnten Seite eine keilförmige Einbuchtung (40; 39, 139, 639; 39') aufweist, wobei vorzugsweise die Einbuchtung (39, 139, 639; 39'; 40) durch zwei Drucklager (41, 141, 241, 341, 441, 541, 641; 42, 142, 242, 642; 43, 143, 243, 443, 643; 44, 144, 244, 344, 644), einem ersten Drucklager (41, 141, 241, 341, 441, 641, 541; 42, 142, 242, 642) und einem zweiten Drucklager (44, 144, 244, 344, 644; 43, 143, 243, 443, 643), begrenzt ist, die vorteilhaft dreieckschenklig zueinander in einem Winkel (40) zwischen 91° und 179° angeordnet sind.

4. Synchronisationsdruckstück (2, 102) nach einem der vorhergehenden Ansprüche,
**dadurch gekennzeichnet, dass**
das zweite Gefügeelement (14, 114, 614) eine das erste Gefügeelement (5, 105, 205) bedeckende Basisplatte (16, 116, 216, 316, 416, 516, 616) umfasst, an deren Seite, die eine insbesondere rechtwinklig zu einer Deckebene (19, 119) der Basisplatte (16, 116, 216, 316, 416, 516, 616) angeordneten Höhe darstellt, wenigstens eines der Drucklager (41, 141, 241, 341, 441, 541, 641; 42, 142, 242, 642; 43, 143, 243, 443, 643; 44, 144, 244, 344, 644) vorhanden ist.

5. Synchronisationsdruckstück (2, 102) nach einem der vorhergehenden Ansprüche,
**dadurch gekennzeichnet, dass**
das zweite Gefügeelement (14, 114, 614) wenigstens einen Vorsprung (20; 56, 156; 60, 160, 660; 61, 161, 661) aufweist, vorzugsweise zwei in entgegengesetzte Richtungen (4, 62, 70, 79) aus der Basisplatte (16, 116, 216, 316, 416, 516, 616) herausragende Vorsprünge (20; 56, 156; 60, 160, 660; 61, 161, 661) aufweist, wobei vorzugsweise ein Vorsprung eine Sperrleiste (60, 160, 660) darstellt und ein Vorsprung ein Fundament (61, 161, 661) für einen Eingriff in das erste Gefügeelement (5, 105, 205) darstellt.

6. Synchronisationsdruckstück (2, 102) nach Anspruch 5, **dadurch gekennzeichnet, dass** das Fundament (61, 161, 661) gegengleiche Schrägen (63, 163; 64), die insbesondere Innenwänden (8, 9) des ersten Gefügeelements (5, 105, 205) nachgeformt sind, hat und vorzugsweise die Sperrleiste (60, 160, 660) eine gleichsinnige Längserstreckungsrichtung (67, 267, 367, 467, 567) hat, wie das Fundament (61, 161, 661) relativ zur Basisplatte (16, 116, 216, 316, 416, 516, 616) verläuft.

7. Synchronisationsdruckstück (2, 102) nach einem der vorhergehenden Ansprüche,
**dadurch gekennzeichnet, dass**
das zweite Gefügeelement (14, 114, 614), insbesondere mit Hilfe der Sperrleiste (60, 160, 660), in einer gleichbleibenden Horizontallage (29) im Vergleich zu dem ersten Gefügeelement (5, 105, 205) verharrt, während eine durch eine Krafteinwirkung auf das Drucklager (41, 141, 241, 341, 441, 541, 641; 42, 142, 242, 642; 43, 143, 243, 443, 643; 44, 144, 244, 344, 644) durchgeführte Auswinkelung (71) stattfindet.

8. Synchronisationsdruckstück (2, 102) nach einem der vorhergehenden Ansprüche,
**dadurch gekennzeichnet, dass**
eines der Gefügeelement (5, 105, 205; 14, 114, 614) eine "X"-artige Taillierung (39, 139, 639) aufweist, wobei die Taille (39') in einer Flacherstreckung (69; 32, 132, 232, 332, 432, 532; 33, 133, 233, 333, 433, 533), insbesondere rechtwinklig zu einem Fundament (61, 161, 661), aus jeweils zwei gewinkelt zueinander angeordneten Drucklagerpaaren (41,44;141,144;241,244;341,344;441,443;641,644;42,43,142,143;242,243; 642, 643) gebildet wird und vorzugsweise die Taillierung (39, 139, 639) des Gefügeelements (14, 114, 614) mit einer Ausbauchung (20) wie einer trapezartigen Ausbauchung des Gefügeelements (14, 114, 614) in mindestens einer Richtung (62; 68, 268, 368, 468, 568, 568) entlang einer zum Drucklagerpaar (41, 44; 141, 144; 241, 244; 341, 344; 441, 443; 641, 644; 42, 43, 142, 143; 242, 243; 642, 643) abgewinkelten Seite (30, 130, 230, 330, 430, 530; 30, 130, 230, 330, 430, 530; 32, 132, 232, 332, 432, 532; 33, 133, 233, 333, 433, 533) verbunden ist.

9. Synchronisationsdruckstück (2, 102) nach einem der vorhergehenden Ansprüche,
**dadurch gekennzeichnet, dass**
wenigstens ein Gefügeelement (5, 105, 205; 14, 114, 614; 73; 74, 174; 75,175) eine trapezförmige Schnittebene (23, 26) in seinem flacherstreckten Teil (16, 116, 216, 316, 416, 516, 616; 10, 110, 210; 76, 77), vorzugsweise eine mindestens doppeltrapezförmige Schnittebene (23, 26), hat und vorzugsweise eine erste Trapezbasis (30, 130, 230, 330, 430, 530) und eine zweite Trapezbasis (31, 231, 331, 431, 531) voneinander weiter beabstandet sind als eine im jeweiligen Trapez (16, 116, 216, 316, 416, 516, 616) zugeordnete erste (32, 132, 232, 332, 432, 532) und zweite parallele Seite (33, 133, 233, 333, 433, 533) und
vorzugsweise Trapezdiagonalen (34, 35; 36, 37) insbesondere eines Trapezes (30, 32, 41, 44); 31, 33, 43, 44) von gleicher Länge sind.

10. Synchronisationsdruckstück (2, 102) nach einem der vorhergehenden Ansprüche 5 bis 9, **dadurch gekennzeichnet, dass**
das zweite Gefügeelement (14, 114, 614)eine seitlich überragende Basisplatte (16, 116, 216, 316, 416, 516, 616) insbesondere in Form eines Zylindermantelsegments (26) umfasst, die vorzugsweise umfangsbegrenzt ist durch eine Mehrzahl zueinander angewinkelter Drucklagerflächen (46, 146; 47; 41, 141, 241, 341, 441, 541, 641; 42, 142, 242, 642; 43, 143, 243, 443, 643; 44, 144, 244, 344, 644),
von denen insbesondere jeweils zwei diagonal gegenseitig beabstandete Drucklagerflächen (46, 47; 41, 42: 43, 47; 141, 143; 142, 144; 241, 243; 641, 643; 642, 644) zueinander parallel verlaufen.

11. Synchronisationsdruckstück (2, 102) nach einem der vorhergehenden Ansprüche,
**dadurch gekennzeichnet, dass**
ein Gefügeelement (5, 105, 205; 14, 114, 614; 73; 74, 174; 75,175), insbesondere das zweite Gefügeelement (14, 114, 614), mindestens eine Drucklagerfläche (142, 143) aufweist, die in einer Richtung (62; 67, 267, 367, 467, 567; 68, 268, 368, 468, 568, 568), insbesondere in einer Richtung rechtwinklig zu einer lateralen Erstreckung (68, 268, 368, 468, 568, 568) des Gefügeelements (114), eine gerade Form und in einer zweiten, dazu rechtwinklig angeordneten Richtung eine bogenförmige Form aufweist, wobei vorzugsweise lateral beabstandete Drucklagerflächen (141, 142; 143, 144) eine zueinander geneigte, insbesondere zur Nachbildung eines Ausschnittsegments (26) nachgeführte, Richtung einnehmen.

12. Synchronisationsdruckstück (2, 102) nach einem der vorhergehenden Ansprüche 5 bis 11, **dadurch gekennzeichnet, dass**
das zweite Gefügeelement (14, 114, 614) mindestens zwei prismenartige Strukturen (60, 160, 660; 61, 161, 661) als Vorsprünge umfasst, wie eine Doppelpyramidenstumpfform (56, 156),
die vorzugsweise jeweils mit einer mehreckigen Pyramidenbasis (57, 157; 58) ausgeführt ist, wobei sich die prismenartigen Strukturen (60, 160, 660; 61, 161, 661) in einer Richtung senkrecht zur Basisplatte (16, 116, 216, 316, 416, 516, 616) entgegengesetzt erstrecken, und
insbesondere eine der prismenartigen Strukturen (61, 161, 661) auf eine Oberfläche (8, 9) des ersten Gefügeelementes (5, 105, 205) abgestimmt ist,
und/oder
dass die zweite prismenartige Struktur (61, 161, 661) derart gehärtet ist, dass eine Kraft aus einem Kraftübertragungselement wie einer Schiebemuffe (90), z. B. über eine Nut, in dem zweiten Gefügeelement (14, 114, 614) übertragbar ist.

13. Synchronisationsdruckstück (2, 102) nach einem der vorhergehenden Ansprüche,
**dadurch gekennzeichnet, dass**
das zweite Gefügeelement (14, 114, 614) um eine Drehachse (4, 70, 79) herum, die insbesondere durch das erste Gefügeelement (5, 105, 205) durchreicht, beweglich angeordnet ist,
und/oder
dass
in jedem der Gefügeelemente (5, 105, 205; 14, 114, 614; 74, 174; 75,175) jeweils mindestens zwei rechteckig zueinander angeordnete Gleitflächen in der Form von Wänden (8, 9; 63, 163, 64) vorhanden sind, die mindestens eine erste Rechtecköffnung (6) und eine im Vergleich dazu kleinere zweite Rechtecköffnung (7) innenliegend umschließen, wobei eine erste Gleitfläche (9) des ersten Gefügeelements (5) einer ersten Gleitfläche (163) des zweiten Gefügeelements (114) parallelartig gleichwinklig zugeordnet ist, und
insbesondere auf einer Führung der Gleitflächen (9, 163) die Gefügeelemente (114, 5) im Synchronisationsdruckstück (2, 102) in einer Passform (12, 112) zueinander angeordnet sind,
und/oder
dass über eine stumpfpyramidale Gefügeerstreckung (61, 161, 661; 6,7) des ersten Gefügeelements (5, 105, 205) in das zweite Gefügeelement (14, 114, 614) Torsionskräfte, insbesondere Torsionskräfte die um eine radiale Verbindungslinie (4, 70, 79) zwischen dem Synchronisationsdruckgefüge (2, 102) und der Wellenachse (78, 178) an dem Synchronisationsdruckgefüge (2, 102) wirken, übertragbar sind,
und/oder
dass das erste Gefügeelement (5, 105, 205) und das zweiten Gefügeelement (14, 114, 614) aus einem Hartmetall, wie einem Stahlblech oder einem gesinterten Metall, geformt sind und vorzugsweise zueinander kippbeweglich sind.

14. Schaltgetriebe mit wenigstens einer Synchronisation, die wenigstens ein Synchronisationsdruckstück (2, 102), insbesondere nach einem der vorhergehenden Ansprüche, umfasst, und
mit wenigstens einem Synchronring (74, 174, 75, 175),
mit wenigstens einem Synchronkörper (80, 180), der eine Nabe (81, 181) bietet, mit wenigstens einem Losrad (96),
mit wenigstens einer Schiebemuffe (90), die in Zähnen (89, 189) des Synchronkörpers (80, 180) schiebbeweglich geführt ist,
mit wenigstens einer Welle (78, 178), auf der der Synchronkörper (80, 180) und das Losrad (96) sitzen,
**dadurch gekennzeichnet, dass**
das Synchronisationsdruckstück(2, 102) ein zweigeteiltes Servosynchronisationsdruckstück mit einem ersten Gefügeelement (5, 105, 205) und einem zweiten Gefügeelement (14, 114, 614) ist, wobei das zweite Gefügeelement (14, 114, 614) mit wenigstens einer Servoschräge (41, 141, 241, 341, 441, 541, 641; 42, 142, 242, 642; 43, 143, 243, 443, 643; 44, 144, 244, 344, 644) ausgestattet ist, sodass das Synchronisationsdruckstück (2, 102) ein Wandler für ein Drehmoment des Synchronkörpers (80, 180) durch eine Anlagerung an einer Ausnehmung wie einer Nabenausnehmung (82, 182) oder einer Schiebemuffenausnehmung in Richtung auf das Losrad (96) in eine Anpresskraft ist,
und/oder
dass der Synchronring (74, 174, 75, 175) mit wenigstens einem Synchronringmaul (76, 176, 276) und mit wenigstens zwei Synchronringklinken (77) als seitliche Begrenzung des Synchronringmauls (76) ausgestattet ist, zwischen die das erste Gefügeelement (5, 105, 205), insbesondere mit einem Fuß (10, 110, 210), in Eingriff zu bringen ist.

15. Servosynchronisation in einem schaltbaren Getriebe (98), umfassend ein Synchronisationsdruckstück (2, 102), insbesondere nach einem der vorhergehenden Ansprüche 1 bis 13, umfassend mindestens zwei Druckgefügeelemente (5, 105, 205; 14, 114, 614; 73; 74, 174; 75,175), eine Mehrzahl von Getriebegangelementen (74, 174, 75, 175, 80, 180, 90, 96), wie z. B. mindestens eine Nabe (81, 181) und mindestens ein Losrad (96), und mindestens ein Stellelement wie eine Schiebemuffe (90),
**dadurch gekennzeichnet, dass**
ein Einschalten eines Getriebegangs durch das Synchronisationsdruckstück (2, 102) vermittelt wird und durch das Synchronisationsdruckstück (2, 102) mindestens zwei Schaltunterstützungsfunktionen ausgeführt werden, von denen eine erste Schaltunterstützungsfunktion eine Schaltsperrfunktion, und eine zweite Schaltunterstützungsfunktion eine Drehzahlsynchronisationsbeschleunigung, insbesondere bewirkt durch eine servoartige Wandlung einer Wellendrehkraft über eine keilartige Drucklageranordnung (41, 141, 241, 341, 441, 541, 641 42, 142, 242, 642 43, 143, 243, 443, 643 44, 144, 244, 344, 644; 84, 184, 85, 185, 86, 87) zwischen einem Druckgefügeelement (5, 105, 205; 14, 114, 614; 74, 174; 75,175) und einem Getriebegangelement (74, 174, 75, 175, 80, 180, 81, 181, 90, 96) oder einem Stellelement (90) in eine Andruckkraft, darstellt,
und/oder
dass die erste Schaltunterstützungsfunktion und die zweite Schaltunterstützungsfunktion durch ein erstes Druckgefügeelement (5, 105, 205) vermittelt werden, wobei in der zweiten Schaltunterstützungsfunktion das erste Druckgefügeelement (5, 105, 205), vermittelt über ein adaptierendes zweites Druckgefügeelement (14, 114, 614), in eine Ausformung eines dritten Druckgefügeelements, wie einen Synchronring (74, 174; 75,175), eingefügt ist,
und/oder
dass in der zweiten Schaltunterstützungsfunktion eine ausgeübte Schaltkraft in eine Synchronisationskraft verstärkt wird und ein Gleichlauf einer Mehrzahl von Getriebegangelementen (74, 174, 75, 175, 80, 180, 81, 181, 90, 96, 98) aufgrund eines Winkels (51, 251, 351, 451, 551; 51, 251, 351, 451, 551; 53, 253, 353, 453, 553; 54, 254, 354, 454, 554) einer Servoschräge (41, 141, 241, 341, 441, 541, 641 42, 142, 242, 642 43, 143, 243, 443, 643 44, 144, 244, 344, 644; 84, 184, 85, 185, 86, 87) selbstbetätigungsfrei eingestellt wird.
